# EUROPEAN PATENT SPECIFICATION

(11) **EP 3 455 488 B1**
(45) Date of publication and mention of the grant of the patent: **19.08.2020**
(21) Application number: 17721729.6
(22) Date of filing: 08.05.2017
(51) Int. Cl.: F16B 2/08, F03B 13/10, F03B 13/26

(54) **WATER CURRENT POWER GENERATION SYSTEMS**
WASSERSTRÖMUNGSTROMERZEUGUNGSSYSTEME
SYSTÈMES DE GÉNÉRATION DE PUISSANCE À PARTIR D'UN COURANT D'EAU

(30) Priority: 10.05.2016 GB 201608155
(43) Date of publication of application: 20.03.2019
(73) Proprietor: GE Energy (UK) Limited, Altrincham, Cheshire WA14 2DT (GB)
(72) Inventor: SMALLWOOD, Ioan, Hammersmith London W6 8BJ (GB); GOSS, Richard, Hammersmith London W6 8BJ (GB); HARPER, Simon, Hammersmith London W6 8BJ (GB); WHEELER, Kai, 38041 Grenoble (FR); WARREN, Timothy, Bristol BS13AG (GB)
(74) Representative: Openshaw & Co.
(86) International application number: PCT/EP2017/060956
(87) International publication number: WO 2017/194483

(56) References cited:
- WO-A1-2016/034840
- GB-A- 2 467 747
- GB-A- 2 507 730

## Description

The present invention relates to water current power generation systems, and in particular to such systems which employ removable power generation units.

### BACKGROUND TO THE INVENTION

It is widely known that easily accessible resources of fossil fuels are declining. In addition, the impact of the use of fossil fuels upon the environment has become increasingly apparent. As a result of this, it has become imperative that viable alternative energy sources are used as effectively and efficiently as possible. The use of turbines to capture the power of water flow, such as tidal, river and ocean current flows is becoming a viable source of alternative energy. The turbine equipment used to capture such water flow energy typically includes a shaft driven generator connected using a drivetrain to a rotor assembly. The rotor assembly includes a plurality of rotor blades that are driven by the water flow, so as to turn an input shaft of the drivetrain.

In order to be economically practical, multiple water current turbine devices need to be deployed in a suitable area. For example, a tidal turbine farm may have tens to hundreds of turbines. The turbines are preferably arranged in an array having multiple rows of multiple turbines. The turbine array could be deployed in a tidal flow area, a river flow, an ocean current, or any other suitable water current area. Although it is preferable for the turbines to be arranged in an array, geography, bathymetry and other factors may mean that a turbine farm has another arrangement.

Such turbine equipment needs to be secured to the bed of a body of water, such as a sea, estuary or river. Conventional underwater turbines used to drive electrical generators are mounted on a horizontal rotational axis and require a significant number of ancillary features, in order to maximise energy capture. One such feature that is essential for efficient energy generation is yaw capability: it should be possible to direct the turbine to the most effective orientation with respect to the direction of current flow at any particular time.

Installation, maintenance and servicing of underwater power generation apparatus, particularly in deep sea environments, are highly costly and time consuming procedures. It is therefore desirable to simplify the construction and deployment of underwater power generation apparatus, lowering capital cost and reducing the frequency with which in service intervention is required.

The requirement for provision of a retrievable power generation unit that can be oriented appropriately for the flow conditions leads to the need for a solution that can clamp the power generation unit to the support structure, whilst having respective positions for generation, removal and rotation.

WO 2016/034840 shows a solution with a clamp arrangement.

It is desirable to provide a clamp solution that provides these three positions, whilst enabling desirably speedy transition between the positions.

### SUMMARY OF THE INVENTION

According to one aspect of the present invention, there is provided an underwater power generating system comprising one or more of the following: a power generation unit and a support structure, the power generation unit preferably having a mounting portion which may be releasably engageable with a support portion of the support structure; and a clamp arrangement for clamping the mounting portion to the support portion, and preferably having an open position in which the mounting portion may be removable from the support portion, a closed position in which the mounting portion may be fixed relative to the support portion, and a bearing position in which the mounting portion may be rotatable relative to the support portion and may not be removable from the support portion, the clamp arrangement preferably comprising first and second clamp portions, and actuation means arranged between the first and second clamp portions, and preferably operable to move the first and second clamp portions between the open position, the bearing position and the closed position of the clamp arrangement, wherein the actuation means may comprise one or more of: a first drive unit preferably operable to move the first and second clamp portions between the open position, the bearing position and the closed position of the clamp arrangement; a spring unit arranged to provide a clamping load on the first and second clamp portions; and a second drive unit operable to reduce the clamping load during operation of the first drive unit.

According to another aspect of the present invention, there is provided a clamp arrangement for an underwater power generating system which includes a power generation unit and a support structure. The power generation unit preferably having a mounting portion which may be releasably engageable with a support portion of the support structure, and preferably a clamp arrangement for clamping the mounting portion to the support portion, and preferably having an open position in which the mounting portion may be removable from the support portion, a closed position in which the mounting portion may be fixed relative to the support portion, and a bearing position in which the mounting portion may be rotatable relative to the support portion and may not be removable from the support portion, the clamp arrangement preferably comprising first and second clamp portions, and preferably actuation means arranged between the first and second clamp portions, and preferably operable to move the first and second clamp portions between the open position, the bearing position and the closed position of the clamp arrangement. Preferably, the actuation means comprises one or more of a first drive unit operable to move the first and second clamp portions between the open position, the bearing position and the closed position of the clamp arrangement; a spring unit arranged to provide a clamping load on the first and second clamp portions; and a second drive unit operable to reduce the clamping load during operation of the first drive unit.

In one example, the actuation means may comprise a body attached to the first clamp portion, wherein the first drive unit may comprise an actuation member attached to the second clamp portion, and preferably drive means operable to drive the actuation member with respect to the body portion of the actuation means.

In one example, the first drive unit may be provided by a leadscrew device having an elongate shaft which extends out of the body of the actuation means, and a motor operable to rotate the shaft about a longitudinal axis thereof, the actuation means preferably being engaged in a threaded arrangement with the second clamp portion, the drive means being operable to rotate the shaft about a longitudinal axis thereof.

In one example, the second drive unit may be provided by a hydraulic ram device.

In one example, the first and second drive units may be coaxial.

According to another aspect of the present invention there is provided a method of using an underwater power generating system or a clamp arrangement for an underwater power generating system as set out above.

Features of any of the above aspects of the invention may be readily combined with one or more features of another aspect of the invention.

### BRIEF DESCRIPTION OF THE DRAWINGS

Figure 1 is a schematic view of a water current power generation system;
Figure 2 is a schematic drawing of a power generation unit for use in the system of Figure 1;
Figure 3 illustrates a connection between a power generation unit and a support structure of the system of Figure 1; and
Figures 4 to 7 illustrate a clamp arrangement embodying the principles of the present invention suitable for use with the system of Figure 1.

### DETAILED DESCRIPTION OF THE PREFERRED EMBODIMENTS

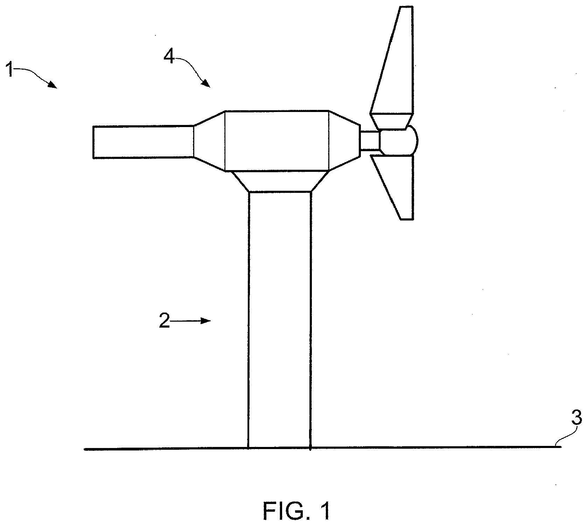

A water current power generation system 1 is shown in Figure 1 and comprises a support structure 2 located on a bed 3 of a body of water. A power generation unit 4, such as a turbine device, is mounted on the support structure 2. In this example, as the water current flows past the power generation unit 4, a rotor assembly turns, thereby driving an electrical generator, or other power converter apparatus, provided in the power generation unit 4. In one example, the power generation unit 4 is buoyant, and is winched down to the support structure 2.

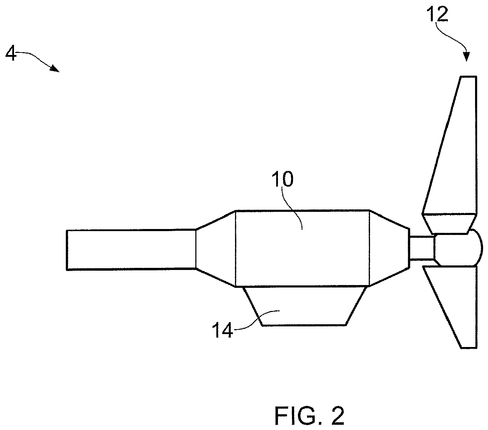

Figure 2 illustrates the power generation unit 4 of Figure 1 in more detail. The power generation unit 4 comprises a main body 10, on which is rotatably mounted a rotor assembly 12. The rotor assembly 12 operates to drive an electricity generator, or other power generation apparatus, housed in the main body 10. The power generation unit 4 is adapted for releasable mounting on the support structure 2, and includes a mount 14 to provide this releasable mounting.

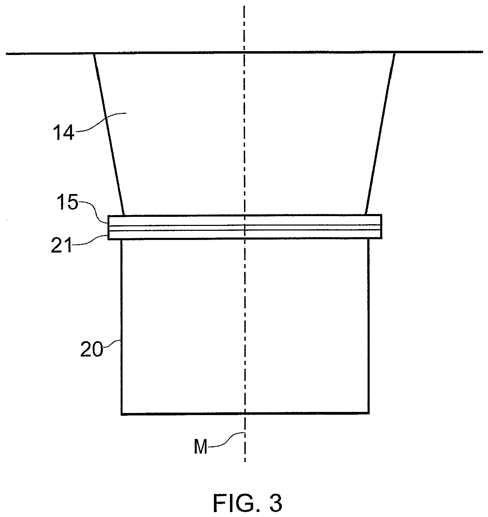

The attachment of the mount 14 to the support structure is shown in more detail in Figure 3. The main body 10, from which the engagement portion 14 extends, is not shown in Figure 3 for the sake of clarity. The mount 14 defines a mounting axis M for the power generating unit 4. In order that the power generation unit 4 is able to rotate with respect to the support structure 2, the mount 14 and the support housing 20 are circular in plan cross section.

The mount 14 has a mounting flange 15 which extends around an outer edge region of the mount 14, and which engages with an associated support flange 21 that extends around an outer edge region of the support housing 20. The mounting and support flanges 15 and 21 allow the power generation unit 4 to be affixed to the support structure 2 in an appropriate manner. Preferably, the power generation unit 4 is substantially rigidly fixed to the support structure 2 during power generation, and is rotatable with respect to the support structure 2 during a re-orientation procedure. Reorientation of the power generation unit 4 is required in order to align the unit into the tidal flow. Since the tidal flow changes direction regularly, as the tide changes, the power generation unit 4 will need reorientation with those changes in tidal flow direction. In contrast to wind turbines which have to track constant changes in wind direction, a tidal flow power generation unit needs only to be reoriented between two positions, since tidal sites have two dominant flow directions.

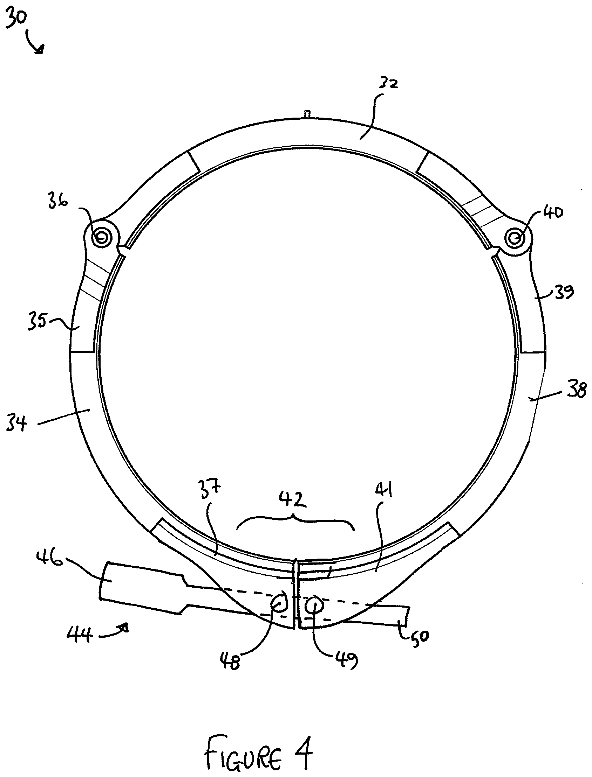

Figures 4 to 7 illustrate a clamp arrangement 30 embodying aspects of the present invention which is able to provide a clamp mounted to hold the mounting flange 15 of the mount 14 to the support flange 21 of the support housing 20. Such a clamp is attached to the mount 14 of the power generation unit 4, and so is retrievable with the power generation unit 4.

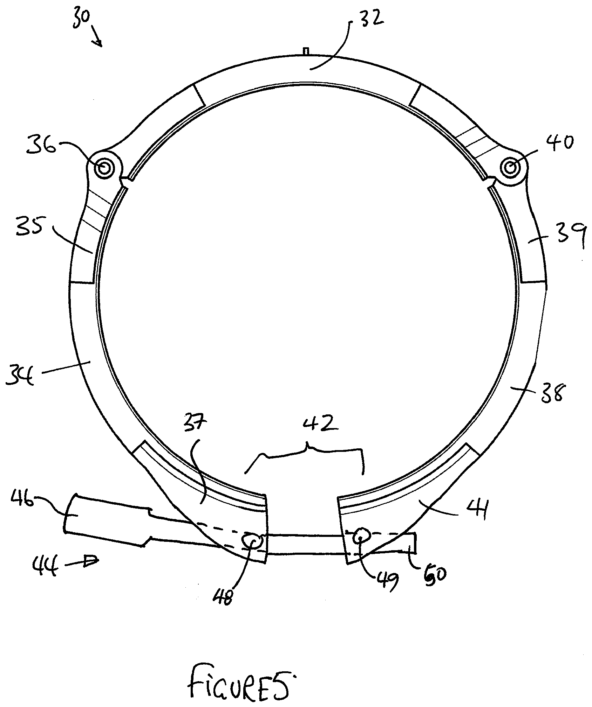

Figure 4 illustrates the clamp arrangement 30 in a closed configuration, and Figure 5 illustrates the clamp in an open configuration. In the closed configuration, the power generation unit 4 is attached to the support structure 2, and cannot be removed or rotated. In the open configuration, the power generation unit is removable from the support structure.

The clamp arrangement 30 comprises a central clamp portion 32, and first and second clamp portions 34 and 38. The clamp portions 32, 34 and 38 are arcuate in form and are linked together to form a substantially circular clamp for engagement around the mounting flange 15 and the support flange 21. The clamp portions 32, 34 and 38 have engagement surfaces that are able to engage with an upper surface of the mounting flange 15 and a lower surface of the support flange 21, thereby holding the flanges into contact with one another.

The first clamp portion 34 is attached at one end region 35 thereof to a first end region of the central clamp portion 32 by way of a first hinge 36. The first hinge 36 enables the first clamp portion 34 to rotate with respect to the central clamp portion 32. The first clamp portion 34 extends from the first end region 35 to a second end region 37, such that the first clamp portion 34 extends from the central clamp portion 32 to an actuation region 42 of the clamp arrangement 30.

Similarly, the second clamp portion 38 is attached at one end region 39 thereof to a second end region of the central clamp portion 32 by way of a second hinge 40. The second hinge 40 enables the second clamp portion 38 to rotate with respect to the central clamp portion 32. The second clamp portion 38 extends from the central clamp portion 32 to a second end region 41, such that the second clamp portion 38 extends from the central clamp portion 32 to the actuation region 42.

Such a configuration enables the clamp arrangement 30 to be moved between the three required positions: open, bearing and closed, by moving the first and second clamp portions 34 and 38 with respect to the central clamp portion 32.

The second end regions 37 and 39 of the first and second clamp portions 34 and 38 are adjacent one another in the actuation region 42, and are spaced apart by a first distance in the open position of the clamp arrangement, by a second distance in the bearing position of the clamp, and by a third distance in the closed position of the clamp. The first distance is greater than the second distance, and the second distance is greater than the third distance.

In order to move the clamp arrangement 30 between the three required positions, an actuation means 44 is provided. The actuation means 44 connects respective second end regions of the first and second clamp portions 34 and 38, and is operable to move the second end regions 37 and 41 of the first and second clamp portions 34 and 38 relative to one another. Such movement causes the clamp arrangement 30 to be moved between the three positions mentioned above.

In an embodiment of the present invention, the actuation means 44 attaches to a first actuation point 48 on the first clamp portion 34 and to a second actuation point 49 on the second clamp portion 38. The actuation means 44 comprises a drive unit 46 and an actuation member 50 which extends from the drive unit 46. The drive unit 46 connects with the first actuation point 48 and the actuation member 50 connects with the second actuation point 49.

Operation of the drive means 46 causes the actuation member 50 to extend out of the drive means 46, or to withdraw into the drive means 46. As the actuation member 50 extends the second actuation point 49 is moved away from the first actuation point 48, thereby opening the clamp. As the actuation member 50 is withdrawn into the drive means 46, the second actuation point 49 is moved towards the first actuation point 48, thereby closing the clamp.

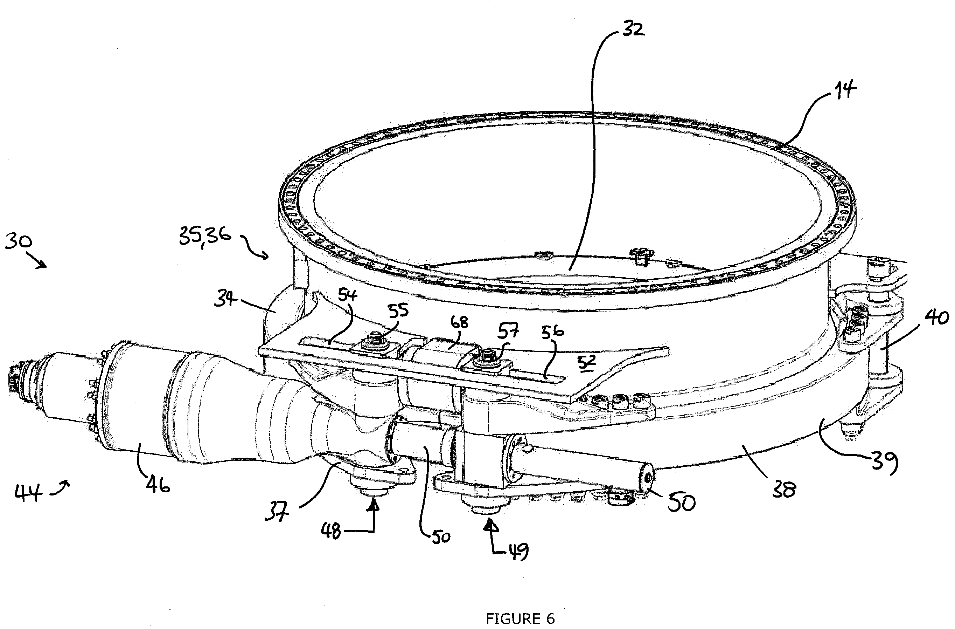

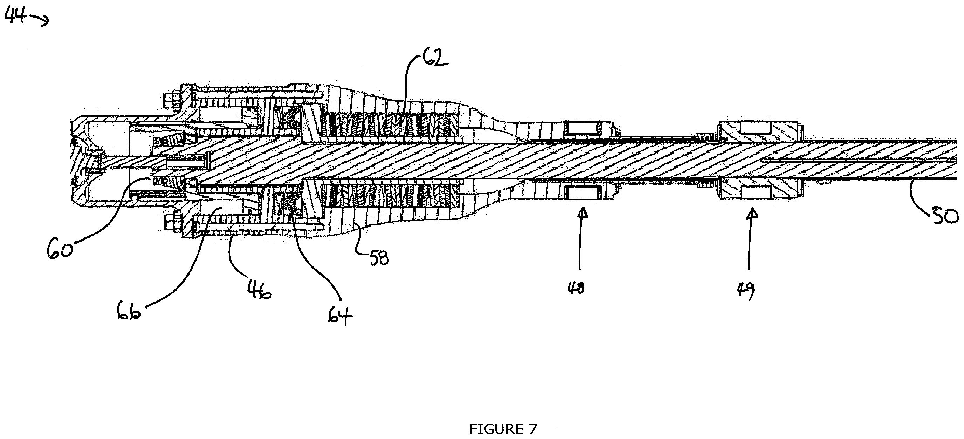

Figure 6 illustrates the clamp embodying the present invention in more detail, and Figure 7 shows a cross-sectional view of the actuation means 44. As shown in Figure 6, the clamp 30 is mounted on the mount 14 of the power generation unit. As described above, the actuation means 44 is mounted between the first and second clamp portions 34 and 38, and is operable to vary the spacing of these clamp portions to provide the required positions of the clamp 30.

The mount 14 is provided with a guide member 52 which includes first and second guide slots 54 and 56. The guide slots 54 and 56 serve to guide the first and second clamp portions 34 and 38. The first and second clamp portions 34 and 38 are provided with first and second guide components 55 and 57 respectively. The first and second guide components 55 and 57 are mounted adjacent the first and second actuation points 48 and 49 respectively, and are arranged to slide within the first and second guide slots 54 and 56. An adjustment member 68 is provided between the first and second actuation points 48 and 49, and operates to ensure that the first and second clamp portions 34 and 38 open evenly and symmetrically. The guide components 55 and 57 aid this symmetrical opening of the clamp 30.

Figure 7 is a cross-sectional view of the actuation means 44 of the clamp 30. The actuation means comprises the drive means 46 and the actuation member 50. The drive means 46 comprises a body 58, a first drive unit 60, a spring unit 62, a second drive unit 64 and a third drive unit 66. The first, second and third drive units 60, 64 and 66 and the spring unit are coaxial, and are arranged along a longitudinal axis of the actuation means 44.

The first drive unit 60 is provided by a hydraulic lead screw device which includes a hydraulic motor that operates to turn a threaded shaft that extends through a complementary threaded portion second actuation point 49. As the threaded shaft is turned by the motor, the spacing of the second actuation point 49 from the actuation means 44 is changed. Since the actuation means 44 is attached to the first actuation point 48, rotation of the threaded shaft with respect to the second actuation point 49 varies the spacing of the first and second actuation points 48 and 49. In this manner, the clamp 30 is positioned appropriately.

The hydraulic leadscrew device operates against the spring unit 62, which provides preload for the closing of the clamp. The spring unit is preferably provided by a series, or stack, of Bellville springs.

The second drive unit 64 is provided in contact with one end of the spring unit 62, and serves to reduce load on the leadscrew device 60. The second drive unit 64 is provided by a short travel hydraulic pancake ram which is in direct contact with the spring unit 62. The second drive unit 64 may have more than one such ram to provide redundancy. When the second drive unit is actuated with hydraulic pressure, it presses directly on a rear face of the spring unit 62, compresses the springs in the spring unit 62, and transfers the load path from the leadscrew into the body 58 of the drive unit. Thus, the preload is removed from the leadscrew, thereby allowing the leadscrew to be rotated under relatively light load. Due to the much reduced torque required to turn the leadscrew, a smaller hydraulic motor can be used. The second drive unit 64 is operated when it is necessary to move the clamp 30 from one position to another, so that the load on the leadscrew device is reduced. This load reduction is particularly useful when moving the clamp from the bearing position to the closed position. When the clamp 30 has been moved to the correct position, the hydraulic pressure in the second drive until 64 is reduced, thereby returning loading to the shaft 50. The clamp 30 can then be held in the correct position. In the event of failure of the second drive unit 64, the loading is increased, so that the design is a fail-safe one.

This improved design of actuation means allows the opening of the leadscrew under very light frictional loads, and yet when closed allows the application of large amounts of preload. Without the provision of the hydraulic second drive unit to alter the load path of the leadscrew, a much larger, possibly unfeasibly large, hydraulic leadscrew motor would be required to apply the necessary torque to obtain the required preload. With the combination of hydraulic cylinders in parallel with the hydraulic leadscrew motor there is good redundancy without requiring other external sub-systems.

The third drive unit 66 is a longer travel hydraulic ram that provides an emergency clamp close function, by linearly driving the shaft 50 directly into the closed position.

Although the embodiment described above includes three clamp portions, it will be readily appreciated that a clamp arrangement embodying aspects of the present invention may include any appropriate number of clamp portions, for example two or four clamp portions.

The aforementioned is not intended to be limiting with respect to the scope of the appended claims. Various substitutions, alterations, and modifications may be made to the invention without departing from the scope of the invention as defined by the claims.

## Claims

1. A clamp arrangement (30) for an underwater power generating system (1) which includes a power generation unit (4) and a support structure (2), the power generation unit having a mounting portion which is releasably engageable with a support portion of the support structure, the clamp arrangement (30) for clamping the mounting portion to the support portion, and having an open position in which the mounting portion is removable from the support portion, a closed position in which the mounting portion is fixed relative to the support portion, and a bearing position in which the mounting portion is rotatable relative to the support portion and is not removable from the support portion, the clamp arrangement comprising:
first and second clamp portions (34, 38), and actuation means (44) arranged between the first and second clamp portions, and operable to move the first and second clamp portions between the open position, the bearing position and the closed position of the clamp arrangement,
wherein the actuation means comprises a first drive unit (60) operable to move the first and second clamp portions between the open position, the bearing position and the closed position of the clamp arrangement, a spring unit arranged to provide a clamping load on the first and second clamp portions, **characterised in that** the actuation means comprises a second drive unit (64) operable to reduce the clamping load during operation of the first drive unit.

2. A clamp arrangement as claimed in claim 1, wherein the actuation means comprises a body (58) attached to the first clamp portion, wherein the first drive unit comprises an actuation member (50) attached to the second clamp portion, and drive means (46) operable to drive the actuation member with respect to the body portion of the actuation means.

3. A clamp arrangement as claimed in claim 2, wherein the first drive unit is provided by a leadscrew device (60) having an elongate shaft which extends out of the body of the actuation means, and a motor operable to rotate the shaft about a longitudinal axis thereof, the actuation means being engaged in a threaded arrangement with the second clamp portion, the drive means being operable to rotate the shaft about a longitudinal axis thereof.

4. A clamp arrangement as claimed in any one of claims 1, 2 or 3, wherein the second drive unit is provided by a hydraulic ram device.

5. A clamp arrangement as claimed in any one of claims 1 to 4, wherein the first and second drive units are coaxial.

6. A clamp arrangement as claimed in claim 5, comprising a third drive unit (66), wherein the third drive unit is coaxial with the first and second drive units.

7. An underwater power generating system comprising:
a power generation unit (4) and a support structure (2), the power generation unit having a mounting portion which is releasably engageable with a support portion of the support structure; and
a clamp arrangement according to any one of claims 1 to 6.

8. A method of using the clamp arrangement of any of claims 1 to 6 or the underwater power generating system of claim 7.

9. A method of generating electrical power, comprising using the apparatus of claim 7 to generate electrical power from a flow of water.

## Patentansprüche

1. Klemmanordnung (30) für ein Unterwasser-Leistungserzeugungssystem (1), das eine Leistungserzeugungseinheit (4) und eine Stützstruktur (2) beinhaltet, wobei die Leistungserzeugungseinheit einen Montageabschnitt, der mit einem Stützabschnitt der Stützstruktur lösbar in Eingriff genommen werden kann, aufweist, und die Klemmanordnung (30) zum Klemmen des Montageabschnitts an den Stützabschnitt, und eine offene Position, in der der Montageabschnitt von dem Stützabschnitt entfernbar ist, eine geschlossene Position, in der der Montageabschnitt relativ zu dem Stützabschnitt fixiert ist, und eine Lagerposition, in der der Montageabschnitt relativ zu dem Stützabschnitt drehbar ist und nicht von dem Stützabschnitt entfernbar ist, aufweist, wobei die Klemmanordnung Folgendes umfasst:
erste und zweite Klemmabschnitte (34, 38), und ein Betätigungsmittel (44), das zwischen den ersten und den zweiten Klemmabschnitten angeordnet und betriebsfähig ist, um die ersten und die zweiten Klemmabschnitte zwischen der offenen Position, der Lagerposition und der geschlossenen Position der Klemmanordnung zu bewegen,
wobei das Betätigungsmittel eine erste Antriebseinheit (60) umfasst, die betriebsfähig ist, um die ersten und die zweiten Klemmabschnitte zwischen der offenen Position, der Lagerposition und der geschlossenen Position der Klemmanordnung zu bewegen, wobei eine Federeinheit angeordnet ist, um eine Klemmlast an den ersten und den zweiten Klemmabschnitten bereitzustellen, **dadurch gekennzeichnet, dass** das Betätigungsmittel eine zweite Antriebseinheit (64) umfasst, die betriebsfähig ist, um die Klemmlast während des Betriebs der ersten Antriebseinheit zu reduzieren.

2. Klemmanordnung nach Anspruch 1, wobei das Betätigungsmittel einen Körper (58), der an dem ersten Klemmabschnitt angebracht ist, umfasst, wobei die erste Antriebseinheit ein Betätigungselement (50), das an dem zweiten Klemmabschnitt angebracht ist, und ein Antriebsmittel (46), das betriebsfähig ist, um das Betätigungselement hinsichtlich des Körperabschnitts des Betätigungsmittels anzutreiben, umfasst.

3. Klemmanordnung nach Anspruch 2, wobei die erste Antriebseinheit durch eine Leitspindelvorrichtung (60) bereitgestellt wird, die eine längliche Welle, die sich aus dem Körper des Betätigungsmittels heraus erstreckt, und einen Motor, der betriebsfähig ist, um die Welle um eine Längsachse davon zu drehen, aufweist, wobei das Betätigungsmittel in einer Gewindeanordnung mit dem zweiten Klemmabschnitt in Eingriff steht, wobei das Antriebsmittel betriebsfähig ist, um die Welle um eine Längsachse davon zu drehen.

4. Klemmanordnung nach einem der Ansprüche 1, 2 oder 3, wobei die zweite Antriebseinheit durch eine hydraulische Kolbenvorrichtung bereitgestellt wird.

5. Klemmanordnung nach einem der Ansprüche 1 bis 4, wobei die erste und die zweite Antriebseinheit koaxial sind.

6. Klemmanordnung nach Anspruch 5, die eine dritte Antriebseinheit (66) umfasst, wobei die dritte Antriebseinheit mit der ersten und der zweiten Antriebseinheit koaxial ist.

7. Unterwasser-Leistungserzeugungssystem, das Folgendes umfasst:
eine Leistungserzeugungseinheit (4) und eine Stützstruktur (2), wobei die Leistungserzeugungseinheit einen Montageabschnitt, der mit einem Stützabschnitt der Stützstruktur lösbar in Eingriff genommen werden kann, aufweist; und
eine Klemmanordnung nach einem der Ansprüche 1 bis 6.

8. Verfahren zum Verwenden der Klemmanordnung nach einem der Ansprüche 1 bis 6 oder des Unterwasser-Leistungserzeugungssystems nach Anspruch 7.

9. Verfahren zum Erzeugen elektrischer Leistung, das das Verwenden der Einrichtung nach Anspruch 7 umfasst, um elektrische Leistung aus einem Wasserfluss zu erzeugen.

## Revendications

1. Agencement de collier de serrage (30) pour un système de production d'énergie sous-marin (1) qui comporte
une unité génératrice d'énergie (4) et une structure de support (2),
l'unité génératrice d'énergie étant dotée d'une partie de montage qui peut entrer en prise de manière amovible avec une partie de support de la structure de support,
l'agencement de collier de serrage (30) servant à serrer la partie de montage sur la partie de support, et présentant une position ouverte dans laquelle la partie de montage est amovible à partir de la partie de support, une position fermée dans laquelle la partie de montage est fixe par rapport à la partie de support et une position d'appui dans laquelle la partie de montage peut tourner par rapport à la partie de support et n'est pas amovible à partir de la partie de support, l'agencement de collier de serrage comprenant :
des première et seconde parties de serrage (34, 38) et un moyen d'actionnement (44) agencé entre les première et seconde parties de serrage, et fonctionnel pour déplacer les première et seconde parties de serrage entre la position ouverte, la position d'appui et la position fermée du dispositif de serrage,
dans lequel le moyen d'actionnement comprend une première unité d'entraînement (60) fonctionnelle pour déplacer les première et seconde parties de serrage entre la position ouverte, la position d'appui et la position fermée de l'agencement de collier de serrage, une unité à ressort agencée pour fournir une charge de serrage sur les première et seconde parties de serrage, **caractérisé en ce que** le moyen d'actionnement comprend une deuxième unité d'entraînement (64) fonctionnelle pour réduire la charge de serrage pendant le fonctionnement de la première unité d'entraînement.

2. Agencement de collier de serrage selon la revendication 1, dans lequel le moyen d'actionnement comprend un corps (58) fixé à la première partie de serrage, dans lequel la première unité d'entraînement comprend un élément d'actionnement (50) fixé à la seconde partie de serrage, et un moyen d'entraînement (46) pouvant fonctionner pour entraîner l'élément d'actionnement par rapport à la partie de corps du moyen d'actionnement.

3. Agencement de collier de serrage selon la revendication 2, dans lequel la première unité d'entraînement est fournie par un dispositif à vis sans fin (60) doté d'un arbre allongé qui s'étend hors du corps du moyen d'actionnement, et un moteur fonctionnel pour faire tourner l'arbre autour d'un axe longitudinal de celui-ci, le moyen d'actionnement étant mis en prise dans un agencement fileté avec la seconde partie de serrage, le moyen d'entraînement étant fonctionnel pour faire tourner l'arbre autour d'un axe longitudinal de celui-ci.

4. Agencement de collier de serrage selon l'une quelconque des revendications 1, 2 ou 3, dans lequel la deuxième unité d'entraînement est fournie par un dispositif de vérin hydraulique.

5. Agencement de collier de serrage selon l'une quelconque des revendications 1 à 4, dans lequel les première et deuxième unités d'entraînement sont coaxiales.

6. Agencement de collier de serrage selon la revendication 5, comprenant une troisième unité d'entraînement (66), dans lequel la troisième unité d'entraînement est coaxiale avec les première et deuxième unités d'entraînement.

7. Système de production d'énergie sous-marin comprenant :
une unité de production d'énergie (4) et une structure de support (2), l'unité génératrice d'énergie étant dotée d'une partie de montage qui peut entrer en prise de manière amovible avec une partie de support de la structure de support ; et
un agencement de collier de serrage selon l'une quelconque des revendications 1 à 6.

8. Procédé d'utilisation de l'agencement de collier de serrage selon l'une quelconque des revendications 1 à 6 ou du système de production d'énergie sous-marin de la revendication 7.

9. Procédé de production d'énergie électrique, comprenant l'utilisation de l'appareil selon la revendication 7 pour produire de l'énergie électrique à partir d'un débit d'eau.
